# EUROPEAN PATENT APPLICATION

(11) **EP 4 752 775 A1**
(43) Date of publication of application: **03.06.2026**
(21) Application number: 24929409.1
(22) Date of filing: 20.09.2024
(51) Int. Cl.: G06F 21/64

(54) **MANAGEMENT DEVICE, METHOD FOR CONTROLLING MANAGEMENT DEVICE, AND PROGRAM**

(71) Applicant: LE-TECHS INC., Tokyo 160-0005 (JP)
(72) Inventor: OGURA, Takashi, Tokyo 153-0065 (JP)
(74) Representative: Hoffmann Eitle
(86) International application number: PCT/JP2024/033739
(87) International publication number: WO 2026/062898

(57) **Abstract**

A management device for managing an electronic signature for an electronic content, the management device including: an acquisition unit acquiring an instruction of a signature; a signature generating unit generating an electronic signature; an attachment unit attaching the electronic signature to the electronic content; an electronic certificate generating unit generating an electronic certificate; an electronic certificate information storing unit executing a process for storing electronic certificate information in each ledger system of a plurality of ledger systems; a response acquiring unit acquiring a plurality of responses for a request for the electronic certificate information; an aggregated value calculating unit calculating an aggregated value of each of identical responses by aggregating coefficients associated with the ledger systems, for each of the identical responses included in the plurality of responses; a determination unit determining one response as a response matching the electronic certificate information on the basis of the aggregated values; and an output unit outputting the one response.

## Description

### Technical Field

The present disclosure relates to a management device, a method of controlling a management device, and a program.

### Background Art

Conventionally, electronic signatures have been used to ensure the authenticity of electronic content data such as an electronic document and the like. For example, Patent Literature 1 discloses an electronic signature management system used for attaching an electronic signature to signature target data. In addition, for example, Patent Literature 2 proposes a method for storing a personal identification information hash value, to which an electronic signature has been attached, in a blockchain, which is a distributed-type ledger system, as a personal authentication method using the blockchain.

### Citation List

### Patent Literature

Patent Literature 1: Patent Publication JP-A-2018-067807
Patent Literature 2: Patent Publication JP-A-2024-077561

### Summary of Invention

### Technical Problem

Although storing certificates (electronic certificates), used for proving matters relating to electronic signatures, in ledger systems such as blockchains or the like is conceivable, information stored in a ledger system per se may still be subject to alteration, and thus, further improvement in the reliability of electronic signatures has been desired.

Thus, the present invention has been made in view of the conventional circumstances described above, and an object thereof is to improve the reliability of electronic signatures.

### Solution to Problem

A management device according to an embodiment of the present invention is a management device for managing an electronic signature for an electronic content, the management device including: an acquisition unit acquiring an instruction of a signature for an electronic content; a signature generating unit generating an electronic signature in accordance with the instruction; an attachment unit attaching the generated electronic signature to the electronic content; an electronic certificate generating unit generating an electronic certificate relating to the electronic signature; an electronic certificate information storing unit executing a process for storing electronic certificate information that is information included in an electronic certificate in each ledger system of a plurality of ledger systems; a response acquiring unit acquiring a plurality of responses that are outputs respectively from the plurality of ledger systems for a request, with the request for the electronic certificate information, which is stored in each of the plurality of ledger systems, being transmitted to the plurality of ledger systems; an aggregated value calculating unit calculating an aggregated value of each of identical responses included in the plurality of responses by aggregating coefficients associated with the ledger systems that have output the responses, for each of the identical responses included in the plurality of responses; a determination unit determining one response among the plurality of responses as a response matching the electronic certificate information on the basis of the aggregated values; and an output unit outputting the one response.

In accordance with this, after electronic certificate information that is at least a part of an electronic certificate relating to an electronic signature is stored in each of the plurality of ledger systems, a response to a request for electronic certificate information is acquired from each of the plurality of ledger systems, an aggregated value is calculated by aggregating coefficients associated with the ledger systems that have output the responses for each identical response, one response among the plurality of responses is determined as a response matching the electronic certificate information on the basis of the aggregated value, and this is output. Accordingly, the possibility of an alteration of the electronic certificate information is reduced, and therefore the reliability of electronic signatures can be improved.

### Advantageous Effect of Invention

According to the present invention, the reliability of electronic signatures can be improved.

### Brief Description of Drawings

[Figure 1] Figure 1 is a schematic view illustrating an overview of an electronic signature management system 100 using a management device 1 according to an embodiment.
[Figure 2] Figure 2 is a schematic view illustrating an electronic document D to which an electronic signature S generated by a management device 1 according to an embodiment has been attached.
[Figure 3] Figure 3 is a block diagram illustrating the configuration of a management device 1 according to an embodiment.
[Figure 4] Figure 4 is a schematic view illustrating one example of a data structure of an electronic certificate according to an embodiment.
[Figure 5] Figure 5 is a schematic view illustrating one example of a data structure of a ledger system table according to an embodiment.
[Figure 6] Figure 6 is a block diagram illustrating the configuration of a user terminal 4 according to an embodiment.
[Figure 7] Figure 7 is a sequence diagram illustrating one example of processes of operations such as generation of an electronic signature and an electronic certificate and the like executed by an electronic signature management system 100 according to an embodiment.
[Figure 8] Figure 8 is an operation flowchart illustrating one example of an inquiry process for electronic certificate information that is executed by a management device 1 according to an embodiment.

### Description of Embodiments

A preferred embodiment of the present invention will be described with reference to the attached drawings (in the drawings, components to which the same reference sign is attached have the same configuration or configurations similar to each other).

### (1) Overview

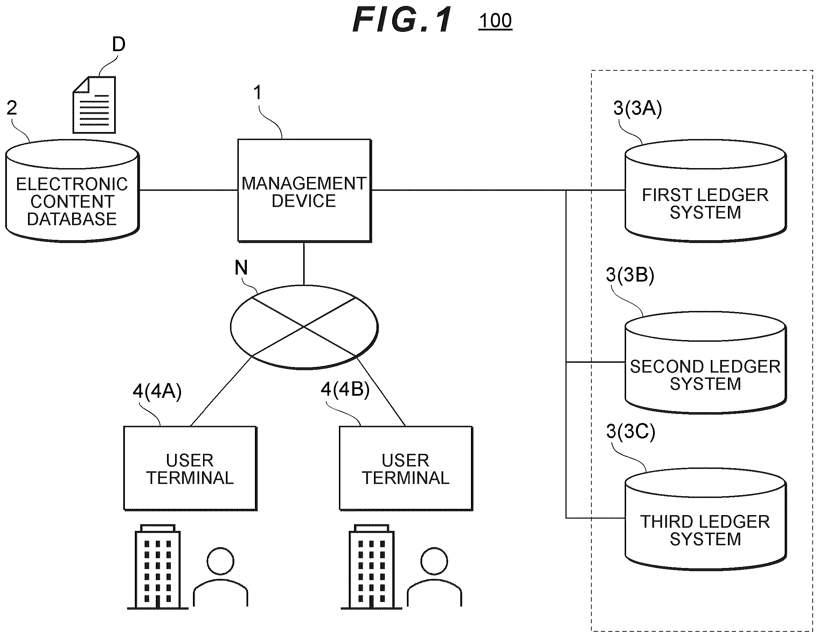

Figure 1 is a schematic view illustrating an overview of an electronic signature management system 100 using a management device 1 according to an embodiment.

As illustrated in Figure 1, the electronic signature management system 100, for example, includes a management device 1, an electronic content database 2, a plurality of ledger systems 3, a plurality of user terminals 4, and the like. In the example illustrated in Figure 1, the ledger system 3 includes a first ledger system 3A, a second ledger system 3B, and a third ledger system 3C. In addition, the ledger system 3 according to an embodiment is not limited to inclusion of three ledger systems and may include two or four or more ledger systems 3. The management device 1 is connected to the electronic content database 2 and the ledger system 3 such that it can manage (store, delete, change, and the like) information. In addition, the management device 1 is connected the plurality of user terminals 4 through a communication network N such as the Internet or the like such that information can be transmitted and received therebetween.

The management device 1, for example, is a computer (an information processing device) such as a server or the like and has a processing unit such as a CPU and a storage unit such as a memory. The management device 1 is a device that generates an electronic signature S for an electronic content D such as a user's agreement or the like. The electronic content D, for example, is stored in the electronic content database 2. In other words, the management device 1 is a device having a function of generating an electronic signature S attached to the electronic content D of a user. For example, by attaching the electronic signature S to the electronic content D to be visually recognizable, the management device 1 may generate an electronic content D indicating consent or the like for the electronic content D.

In addition, in the following embodiment, "electronic content" may include "electronic document" or may include "electronic image". The "electronic document" is an arbitrary document such as a contract, a quotation, an application form, an order form, a delivery note, an invoice, a receipt, a shipping label, meeting minutes, an approval document, an application form, or a signature list and may include a document that is electronically generated. Furthermore, "electronic image" may be a still image or a moving image (a video) composed of a plurality of still images that are consecutive in a time series. The moving image may be combined with audio. In addition, "electronic signature" may include processing that electronically performs the act of affixing a seal on a paper contract or the like onto electronic content D. Moreover, "electronic certificate" may be a certificate used for proving matters relating to an electronic signature and, for example, may include an electronic record generated for proving that a matter used for confirming that a specific user performed the electronic signature relates to this user.

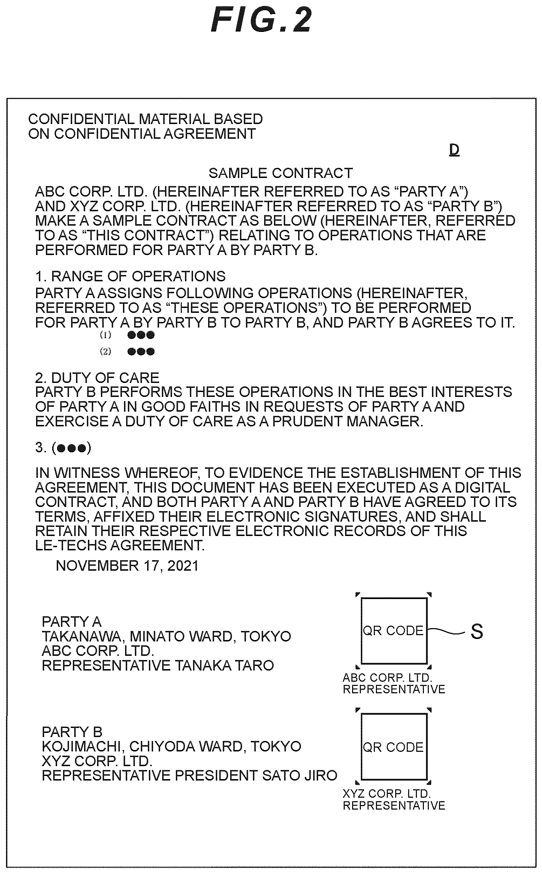

Figure 2 is a schematic view illustrating an electronic document D to which an electronic signature S generated by the management device 1 according to the embodiment has been attached. Particularly, as illustrated in Figure 2, the management device 1 may attach a visually-recognizable electronic signature S to the electronic document D. The management device 1, for example, may attach an electronic signature S corresponding to an individual user to be visually recognizable. The management device 1, for example, may attach an electronic signature S represented as a QR code (a registered trademark) to the electronic content D. In addition, in a case in which an electronic signature S is attached to an electronic image as an electronic content, the management device 1 may superimpose the electronic signature S onto a part of at least one still image included in the electronic image or may attach the electronic signature S to metadata included in the electronic image.

The management device 1, as illustrated in Figure 1, is connected to the ledger system 3 (the first ledger system 3A, the second ledger system 3B, and the third ledger system 3C). The management device 1 generates an electronic certificate of an electronic content D to which an electronic signature S is attached. The management device 1 stores at least a part (electronic certificate information) of the electronic certificate of the generated electronic content D in each of the first ledger system 3A, the second ledger system 3B, and the third ledger system 3C. Each ledger system 3 may be a distributed-type ledger system. The ledger system 3, for example, may be configured to include a plurality of node computers (nodes) storing a blockchain. The format of the blockchain is not particularly limited and may, for example, be configured as a private blockchain of any one of a public type, a consortium type, and a private type. The management device 1, for example, stores electronic certificates in the first ledger system 3A, the second ledger system 3B, and the third ledger system 3C that are configured using the blockchain and the like.

The management device 1 executes a process of inquiring about desired electronic certificate information (inquiry process) for the plurality of ledger systems 3 included in the electronic signature management system 100 at a predetermined timing. The management device 1 requests electronic certificate information stored in each ledger system 3 from each of the plurality of ledger systems 3 and acquires a response to the request from each ledger system 3. Here, in a case in which there is an alteration of electronic certificate information in at least one of the ledger systems 3, although a plurality of different responses are acquired while being included in a plurality of responses acquired from the plurality of ledger systems 3, the management device 1 according to the embodiment manages electronic certificate information using the plurality of ledger systems 3, and thus authentic electronic certificate information can be secured. In other words, the management device 1 calculates an aggregated value of identical responses included in the plurality of responses by aggregating coefficients associated with the ledger systems that have output the responses for each identical response included in the responses acquired from each ledger system 3. The management device 1 determines one response among the plurality of responses as a response matching the electronic certificate information among the plurality of responses on the basis of the aggregated values and outputs this one response. In this way, in the electronic signature management system 100 according to the embodiment, electronic certificate information is stored in the plurality of ledger systems 3, and, the management device 1 performs an inquiry process of electronic certificate information for the plurality of ledger systems 3 at a predetermined timing, thereby determining and outputting authentic electronic certificate information. In accordance with this, the possibility of alteration of electronic certificate information is reduced, and furthermore, the reliability of electronic signatures is improved.

As illustrated in Figure 1, the user terminal 4, for example, is configured using a device different from the management device 1. The user terminal 4, for example, is a smartphone with an imaging function, a tablet terminal, a computer (an information processing device) such as a personal computer or the like and has a processing unit such as a CPU or the like and a storage unit such as a memory or the like. The user terminal 4 acquires information included in an electronic certificate stored in the ledger system 3 through the management device 1 on the basis of an electronic signature S generated by the management device 1 and executes a process for checking the authenticity of an electronic content D on the basis of the acquired information. In addition, the user terminal 4 executes a display process for various kinds of information on the basis of the information included in the acquired electronic certificate. Particularly, the user terminal 4 displays an URL used for identifying a storage area in which an electronic content D is stored in the electronic content database 2. When a user selects this URL, the user terminal 4 acquires an electronic content D from the electronic content database 2 and displays this electronic content. In accordance with this, under an environment in which the authenticity of the electronic content D is secured, details of the electronic content D can be checked. Furthermore, since the details of the electronic content D can be checked from the electronic signature S, the user can retain evidentiary power not by using a file of the electronic content D but by storing a paper sheet or the like on which the electronic content D is printed out (there is evidence using information of the electronic certificate).

### (2) Configuration

### (2-1) Management Device 1

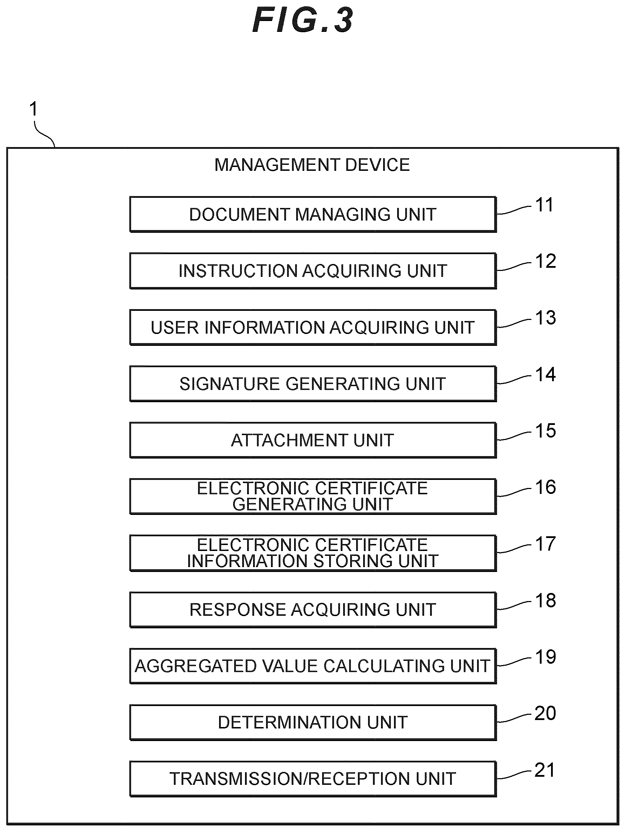

Figure 3 is a block diagram illustrating the configuration of the management device 1 according to the embodiment. The management device 1 includes a document managing unit 11, an instruction acquiring unit 12, a user information acquiring unit 13, a signature generating unit 14, an attachment unit 15, an electronic certificate generating unit 16, an electronic certificate information storing unit 17, a response acquiring unit 18, an aggregated value calculating unit 19, a determination unit 20, and a transmission/reception unit 21. These various kinds of functional units are realized in accordance with an operation of a processing unit such as a CPU included in the management device 1.

The document managing unit 11, for example, is realized in accordance with an operation of a CPU. The document managing unit 11 executes generation, acquisition, correction, storage in the storage unit, and the like on an electronic content D that is a target for an electronic signature. The document managing unit 11, for example, acquires an electronic content D from the electronic content database 2 and the user terminal 4. The electronic content D may be electronic data generated by document generation software or image generation software or may be data acquired by scanning a printed material such as paper or the like. In addition, the document managing unit 11 may perform creation, correction, or the like of an electronic content on the basis of an instruction acquired from the user terminal 4. In addition, the document managing unit 11 may store an electronic content in the electronic content database 2.

The instruction acquiring unit 12 acquires an instruction of a signature (signature instruction) for the acquired electronic content that is a signature target. For example, the instruction acquiring unit 12 acquires a signature instruction from the user terminal 4.

The user information acquiring unit 13 acquires information of a user as user information. In addition, in the embodiment, the user information acquiring unit 13 acquires a user ID and a user name, which are issued in advance, of a user. Here, the user information acquiring unit 13 acquires user IDs and user names of contractors (users) as user information. In addition, in the embodiment, when generating an electronic signature S, the user information acquiring unit 13 acquires user information from the user terminal 4 and the like. The user information may include arbitrary information unique to a user that is managed by the user.

The signature generating unit 14 generates an electronic signature in which an electronic certificate identifier that is an identifier of an electronic certificate is encoded. In addition, the signature generating unit 14 may include a character string that is unique to an electronic certificate identifier. For example, this character string may be unique to each electronic signature S. The electronic certificate identifier, for example, is generated (number-assigned) by attaching an electronic signature S to an electronic content D.

The attachment unit 15 attaches the generated electronic signature S to the electronic content D. The attachment unit 15, for example, may attach the electronic signature S to the electronic content D to be visually recognizable. In accordance with this, attachment of the electronic signature S to the electronic content D can be easily identified. The attachment unit 15, for example, as illustrated in Figure 2, may attach an electronic signature S generated at a position displayed to be aligned to a corporate name and a name of a representative that are information of a user written in the electronic content D. The attachment unit 15, for example, may attach an electronic signature S at a position from which it can be noticed as the electronic signature S corresponding to the written information of the user among the electronic content D. In the embodiment, the attachment unit 15 may write the name of the user included in the acquired user information together with the electronic signature S. The attachment unit 15, for example, as illustrated in Figure 2, for an electronic signature S (QR code) of a corresponding user, writes a user name under a display surface of the electronic content D (electronic document) altogether. In accordance with this, it can be clarified that an electronic signature S of which user the encoded electronic signature S is. In addition, by writing the user name together with the encoded electronic signature S, the code can be treated as a seal impression, whereby a visual effect similar to stamping a seal on paper can be acquired.

The electronic certificate generating unit 16 generates various kinds of electronic certificates relating to an electronic signature S. The electronic certificate, for example, is stored in the ledger system 3.

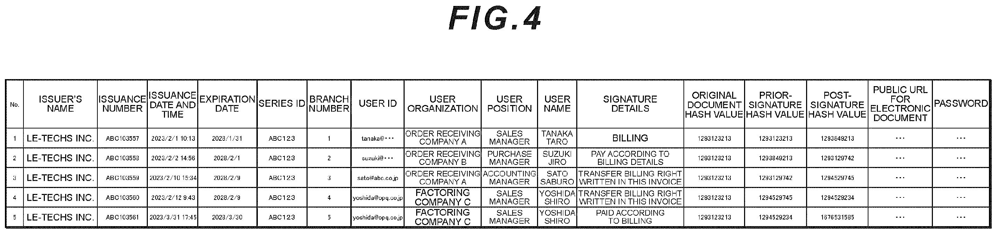

Figure 4 is a schematic view illustrating one example of a data structure of an electronic certificate according to the embodiment. Each row illustrated in Figure 4 corresponds to one electronic certificate. For example, when an electronic signature is attached to an electronic content, one electronic certificate is added to the ledger system 3 at each time.

The electronic certificate may include, for example, an issuer name, an issue number, an issue date and time, an expiration date, a series ID, a branch number, a user ID, a user organization, a user position, a user name, signature details, an original document hash value, a pre-signature hash value, a post-signature hash value, a public URL for electronic content, and a password.

The issuer name is a name of the issuer of an electronic certificate and, for example, may be a name of a manager of the management device 1. The issuance number is an electronic certificate identifier (an identifier used for identifying an electronic certificate) issued by the management device 1. The issuance date and time is a date and time at which an electronic certificate was issued and may also be time information of a signature. The issuance date and time is one example of ranking information (every time when an electronic signature is attached, information representing a certain rank of this electronic signature in a series of electronic signatures) representing a rank of the electronic signature. The expiration date is a date on which the validity period of an electronic certificate expires.

The series ID is one example of series identification information that is identification information used for identifying a series of an electronic content D. The series ID may be unique identification information for (a series of) an electronic content D that does not change even when one or a plurality of electronic signatures S are attached to the electronic content D. In other words, the series ID is identification information given to details (may include corrected details) represented by the electronic content D. In accordance with this, in a case in which an electronic signature S is consecutively given to an electronic content D, this electronic content D and a series of electronic signatures S can be managed as a series, and it can be checked which electronic signature S among a series of electronic signatures S is a latest, whether an electronic signature S attached to a holding electronic content D is the latest, and the like.

The branch number is one example of ranking information (information representing which rank of an electronic signature S in a series of electronic signatures S is when this electronic signature S is attached) representing a rank of an electronic signature S. In the example illustrated in Figure 4, although natural numbers such as 1, 2, 3, and the like are used as branch numbers, branch numbers (ranking information) may be arbitrarily configured using symbols, codes, and the like as long as they can represent ranks.

The user ID is identification information of a user. The user organization is information that represents an organization to which a user belongs. The user position is information representing a position of a user in the organization. The user name is a name of a user (a name of a responsible person of each company).

The signature details are information accompanying an electronic signature S and may be data in the form of text that is arbitrarily input by a user. The signature details, for example, may be an expression of user's intent accompanying an electronic signature or, in a case in which an electronic content that is a target for a signature has been corrected, may be information representing presence of a correction or information representing details of a correction. In accordance with this, by checking an electronic certificate, user's intent for an electronic signature and presence/absence of a correction for an electronic content, and details and the like thereof can be checked.

The original document hash value, the pre-signature hash value, and the post-signature hash value, for example, are used for a process of checking integrity of an electronic content D and the like. The integrity checking process will be described below. The original document hash value is a hash value of an electronic content D (original document) not including any electronic signature. The pre-signature hash value is a hash value of an electronic content D (an electronic content D including an electronic signature S of which a rank is before this electronic signature S) prior to attachment of a latest electronic signature S. The post-signature hash value is a hash value of an electronic content D to which a latest electronic signature S has been attached.

The public URL for electronic content may be a URL (for example, an URL of an electronic content D in the electronic content database 2) used for identifying a storage area in which an electronic content D is stored. In the public URL for electronic content, an expiration data may be set. The password may be a password required when an electronic content D is read by accessing the public URL for opening a file and may be assigned arbitrarily or by a system.

The electronic certificate described above is merely an example, and an electronic certificate according to an embodiment may not include arbitrary items among the items described above and may include items other than the items described above.

The electronic certificate information storing unit 17 stores at least a part (electronic certificate information) of the generated electronic certificate in the ledger system 3 (the first ledger system 3A, the second ledger system 3B, and the third ledger system 3C). The electronic certificate information that is at least a part of the electronic certificate information, for example, may include at least a part of the information illustrated in Figure 4.

The response acquiring unit 18 acquires the electronic certificate information stored in each ledger system 3 from each ledger system 3. More specifically, the response acquiring unit 18, for example, transmits a request for the electronic certificate information stored in each ledger system 3 to each ledger system 3. When the request for electronic certificate information is received from the management device 1, the ledger system 3 outputs the electronic certificate information stored in the ledger system 3 in response to this request and transmits the output electronic certificate information to the management device 1 as a response to this request. The response acquiring unit 18 acquires this response from each ledger system 3. Although a timing at which the process of acquiring a response that is performed by the response acquiring unit 18 may be an arbitrary timing, for example, it may be when a request for inquiring about electronic certificate information is received from the user terminal 4 or the like or may be when an electronic signature for an electronic document is newly generated.

By aggregating coefficients associated with the ledger systems 3 that have output responses for each identical response included in a plurality of responses acquired from a plurality of ledger systems 3 by the response acquiring unit 18, the aggregated value calculating unit 19 calculates an aggregated value of each of identical responses included in the plurality of responses. In other words, an aggregated value may be a sum value of coefficients of each of at least one or more ledger systems 3 that have output identical responses. Furthermore, an aggregated value is a value calculated in association with responses of the electronic certificate information and can be regarded as a score used for selecting authentic electronic certificate information without any alteration.

The determination unit 20, for example, determines one response among a plurality of responses acquired from the ledger systems 3 as a response matching the electronic certificate information on the basis of the aggregated values calculated by the aggregated value calculating unit 19. The determination unit 20, for example, may determine a response of which the aggregated value is the highest among the responses acquired from the plurality of ledger systems 3 as a response matching the electronic certificate information.

The transmission/reception unit 21 transmits/receives various kinds of information to/from the user terminal 4. The transmission/reception unit 21, for example, receives a signature instruction for the electronic content D from the user terminal 4. In addition, the transmission/reception unit 21, for example, transmits an electronic content D (including an electronic content to which the electronic signature S is attached) to the user terminal 4. The transmission/reception unit 21 is one example of an output unit and outputs a response determined as a response matching the electronic certificate information by the determination unit 20. Here, the process of outputting a response, for example, may be a process of transmitting the response to another external device such as the user terminal 4 or the like or may be a process of displaying the response in an arbitrary display device.

Each component included in the management device 1 may be realized by hardware, software, or a combination thereof. Here, being realized by software represents being realized by a computer reading and executing a program. The program is stored using various types of non-transitory computer readable medium and can be supplied to a computer. The non-transitory computer readable medium includes various types of tangible storage medium. Examples of the non-transitory computer readable medium include a magnetic recording medium (for example, a flexible disk, a magnetic tape, and a hard disk drive), a magneto-optical recording medium (for example, a magneto-optical disk), a CD-read only memory (ROM), a CD-R, a CD-R/W, and a semiconductor memory (for example, a mask ROM, a programmable ROM (PROM), an Erasable PROM (EPROM), a flash ROM, and a random access memory (RAM)). In addition, the display program may be supplied to a computer using various types of transitory computer-readable media. Examples of the transitory computer-readable media include electrical signals, optical signals, and electromagnetic waves. The transitory computer-readable media can supply a program to a computer through a wired communication path such as an electric wire or an optical fiber or via a wireless communication path.

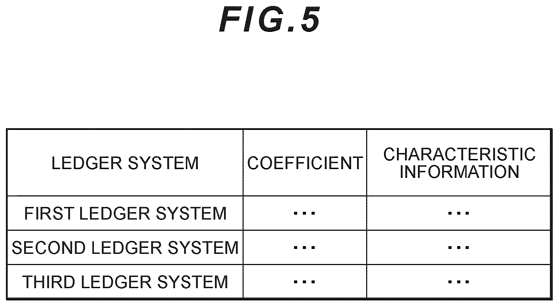

Figure 5 is a schematic view illustrating one example of a data structure of a ledger system table according to an embodiment. The ledger system table, for example, may be stored in a storage unit such as a storage unit or the like included in the management device 1 that the management device 1 can access. The ledger system table may include information relating to each ledger system 3 included in the electronic signature management system 100. In the example illustrated in Figure 5, the ledger system table includes a coefficient and characteristics information of the ledger system 3 for each ledger system 3.

The coefficient is a numerical value associated with each ledger system 3 and, for example, serves as a base for calculating an aggregated value in the inquiry process of electronic certificate information. In other words, this coefficient may be a numerical value representing a possibility or a likelihood of information stored as the electronic certificate information in this ledger system 3 matching authentic electronic certificate information.

The ledger system table may include characteristics information representing characteristics of each ledger system 3. The characteristics information, for example, may be information representing a type of ledger system 3. The type of ledger system 3, for example, may be a classification representing a distributed type or a non-distributed type, a type (a public type, a consortium type, a private type, or the like) in the case of the distributed type, or the like. In addition, the characteristics information, for example, may include an algorithm type. The algorithm type is information that represents a type of an algorithm (a consensus algorithm or the like), which is used for storing information, that is employed by the ledger system 3. More specifically, the algorithm type may include a blockchain, Ethereum, and other algorithms. In addition, the characteristics information, for example, may include a node number. The node number may be the number of nodes configuring the ledger system 3. The characteristics information illustrated in Figure 5 is merely one example, and the ledger system table may include arbitrary characteristics information representing characteristics of the ledger system 3.

The management device 1 may calculate and update coefficients on the basis of the characteristics information representing characteristics of each ledger system 3. The management device 1 may calculate coefficients such that the coefficients of all the ledger system 3 are the same. In this case, substantially, one response is determined as a response matching electronic certificate information through decision by majority using a plurality of ledger systems 3. Alternatively, for example, the management device 1 may calculate the coefficient such that the coefficient of the ledger system 3 is larger as the lower the possibility of alteration of the characteristics information of the ledger system 3 is. More specifically, for example, the coefficient may be configured to be larger in a case in which the ledger system 3 is the distributed type than in a case in which it is the non-distributed type. In addition, for example, the coefficient may be configured to be larger in order of the public type, the consortium type, and the private type of the distributed type ledger system 3. Furthermore, the coefficient may be configured to be larger as the node number of the ledger system 3 becomes larger.

### (2-2) User Terminal 4

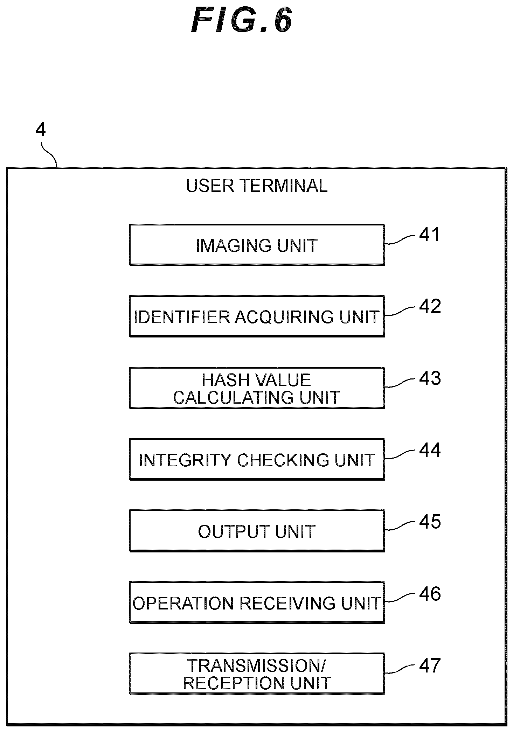

Figure 6 is a block diagram illustrating the configuration of the user terminal 4 according to the embodiment. The user terminal 4 includes an imaging unit 41, an identifier acquiring unit 42, a stored information acquiring unit 43, a hash value calculating unit 43, an integrity checking unit 44, an output unit 45, and an operation receiving unit 46. These various kinds of functional units are realized by operating a processing unit such as a CPU or the like included in the user terminal 4.

The imaging unit 41 is an imaging mechanism including a so-called camera. The imaging unit 41, for example, images an arbitrary electronic signature S attached to an electronic content D. The imaging unit 41, for example, images an arbitrary electronic signature S included in the electronic content D displayed in a display unit (not illustrated in the drawing) of another terminal.

The identifier acquiring unit 42 acquires an electronic certificate identifier included in an electronic signature S imaged through imaging of an electronic signature S (a QR code).

The hash value calculating unit 43 calculates various kinds of hash values on the basis of an electronic content D. The hash value calculating unit 43, for example, may calculate a hash value (a post-signature hash value) of an electronic content D including a latest electronic signature S. Furthermore, the hash value calculating unit 43, for example, may calculate a hash value (a prior-signature hash value) of an electronic content D not including only a latest electronic signature S. In addition, the hash value calculating unit 43, for example, may calculate a hash (an original document hash value) of an electronic content D as an original document not including any electronic signature S.

The integrity checking unit 44, after acquiring an electronic certificate stored in the ledger system 3 through the management device 1, executes a checking process of integrity of an electronic content D relating to the electronic content D on the basis of this. In accordance with the checking process of integrity of an electronic content D, it can be determined whether or not the electronic content D is authentic. For example, the integrity checking unit 44, after acquiring an electronic certificate from the management device 1 on the basis of an electronic certificate identifier acquired by imaging one electronic signature S included in the electronic content D, checks integrity of hash values (an original document hash value, a prior-signature hash value, and/or a post-signature hash value) included in this acquired electronic certificate and hash values (an original document hash value, a prior-signature hash value, and/or a post-signature hash value) calculated from the electronic content D by the hash value calculating unit 43. For example, by determining whether or not the original document hash value acquired from an electronic content D that is a target matches the original document hash value included in the electronic certificate, the integrity checking unit 44 may determine whether or not there is an alteration in the electronic content D as the original document. In addition, for example, by determining whether or not a prior-signature hash value acquired from an electronic content D that is a target (a hash value calculated on the basis of an electronic content acquired by excluding only a latest electronic signature) matches a post-signature hash value included in an electronic certificate of a previous rank, the integrity checking unit 44 may determine whether or not there is an alternation in the electronic content D in a period in which a latest electronic signature S is formed after the previous electronic signature S is formed. A specific operation example is as below. In other words, for example, by imaging an electronic signature S of an (delivered or issued) electronic content D output to a paper sheet using the user terminal 4, a user can access an electronic content D (original) stored in (the electronic content database 2 or the like) of the management device 1 and display the electronic content D in the user terminal 4. The management device 1 may determine whether an electronic content D is authentic by calculating a hash value of the electronic content D that has been accessed and performing inquiry about hash values (an original document hash value, a prior-signature hash value, and a post-signature hash value) for the ledger system 3. For a delivered and issued electronic content D, a user, for example, can check whether the electronic content D is authentic by comparing the delivered and issued electronic content D with the electronic content D displayed in the user terminal 4 which is stored in the management device 1 through visual inspection, and the like. In addition, whether an electronic content D stored in the management device 1 is authentic, for example, may be determined through inquiry about the ledger system 3.

The output unit 45 outputs various kinds of information relating to an electronic content D. For example, the output unit 45 outputs information of various kinds of electronic certificates acquired from the management device 1. In addition, for example, the output unit 45 outputs a checking result of integrity acquired using the integrity checking unit 44.

The operation receiving unit 46 receives various operations of a user. The operation receiving unit 46, for example, receives selection of performing a checking process of integrity relating to an electronic content D. In addition, the operation receiving unit 46, for example, receives transitions of various screens displaying information relating to an electronic content D, selection of a link, and the like.

The transmission/reception unit 47 transmits/receives various kinds of information to/from the management device 1 and other user terminals 4. The transmission/reception unit 47, for example, transmits a signature instruction for an electronic content to the management device 1. In addition, the transmission/reception unit 47, for example, receives an electronic content D (including an electronic content to which an electronic signature S has been attached) and an electronic certificate from the management device 1.

### (3) Operation Example

### (3-1) Generation and etc. of Electronic Signature and Electronic Certificate

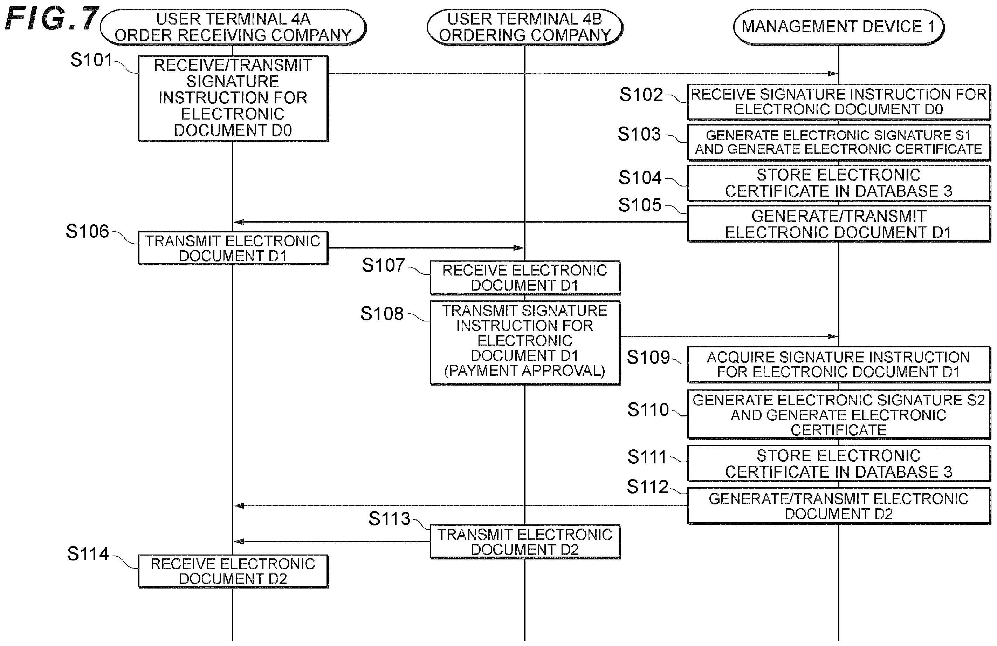

Figure 7 is a sequence diagram illustrating one example of processes of operations such as generation of an electronic signature and an electronic certificate and the like executed by the electronic signature management system 100 according to the embodiment. Hereinafter, a case in which an ordering company that is one example of a user places an order for goods or services provided by an order receiving company for the order receiving company that is another example of a user will be described as an example. The user terminal 4 used by the order receiving company will be referred to as user terminal 4A, and the user terminal 4 used by the ordering company will be referred to as user terminal 4B. In this case, a state is assumed in which a responsible person of the order receiving company has created an electronic document D0 as an invoice for the ordering company of the goods or services. In addition, the electronic document D0 may be created by the user terminal 4A using an electronic document creation service provided by the management device 1 or may be created using general document creation software or the like not using such a creation service. In addition, the created electronic document D0 may be stored in the electronic document database 2 by the management device 1 or may be stored in a storage unit that can be accessed by the user terminal 4A by the user terminal 4A. Although this sequence diagram is an example of a case in which the electronic signature management system 100 according to the embodiment handles electronic documents as electronic content, it is not limited to electronic documents and can also be applied to other electronic content such as electronic images and the like.

When an operation of a signature instruction for an electronic document D0 that is performed by a responsible person of the order receiving company is received, the user terminal 4A used by the responsible person of the order receiving company transmits the signature instruction for the electronic document D0 to the management device 1 (S101). The management device 1 receives the signature instruction for the electronic document D0 from the user terminal 4A (S102).

The signature instruction for the electronic document D0, for example, may include data of the electronic document D0 or may include information (a series ID or the like) used for identifying the electronic document D0 stored in the electronic document database 2, a storage unit that can be accessed by the user terminal 4A, or the like. In addition, the signature instruction, for example, may include arbitrary items (an item relating to a responsible person of the order receiving company and the like) recorded in the ledger system 3. Furthermore, the signature instruction, for example, may include signature details input by a responsible person of the order receiving company. In the example illustrated in Figure 4, signature details "billing" input by the responsible person of the order receiving company are represented.

The management device 1, on the basis of a signature instruction, generates an electronic signature S1 performed by a responsible person of the order receiving company and generates an electronic certificate (S103). In creation of an electronic certificate, the management device 1 generates a hash value of the electronic document D0 prior to attachment of the electronic signature S1 and includes this in the electronic certificate as a pre-signature hash value. In addition, the management device 1 generates a hash value of the electronic document D1 after attachment of the electronic signature S1 and includes this in the electronic certificate as a post-signature hash value. Furthermore, the management device 1 generates a hash value of the electronic document D0 not including any electronic signature S and includes this in the electronic certificate as an original document hash value. The management device 1 stores at least a part of the generated electronic certificate (for example, an electronic certificate of a first row illustrated in Figure 4) in the first ledger system 3A, the second ledger system 3B, and the third ledger system 3C (S104).

By attaching the generated electronic signature S1 to the electronic document D0, the management device 1 generates an electronic document D1. Then, the management device 1 transmits the generated electronic document D1 to the user terminal 4A (S105). The user terminal 4A may store the received electronic document D1 in a storage unit that can be accessed by the user terminal 4A.

The user terminal 4A transmits the electronic document D1 to the user terminal 4B used by a responsible person of the ordering company in accordance with an operation of a responsible person of the order receiving company (S106). In addition, the transmission of the electronic document D1 to the user terminal 4B may be performed through the management device 1. The user terminal 4B receives the electronic document D1 (S107). The user terminal 4B may store the received electronic document D1 in a storage unit that can be accessed by the user terminal 4B.

A responsible person of the ordering company, after appropriately checking details of the received electronic document D1 (details of an invoice), performs an operation of a signature instruction for the electronic document D1 performed by a responsible person of the ordering company. When this operation is received, the user terminal 4B transmits a signature instruction for the electronic document D1 to the management device 1 (S108). The management device 1 receives the signature instruction for the electronic document D1 from the user terminal 4B (S109).

A signature instruction for an electronic document D1, for example, may include data of the electronic document D1 or may include information (a series ID or the like) used for identifying the electronic document D1 stored in the electronic document database 2, a storage unit that the user terminal 4B can access or the like. In addition, the signature instruction, for example, may include arbitrary items (an item relating to a responsible person of the ordering company and the like) recorded in the ledger system 3. Furthermore, the signature instruction, for example, may include signature details input by a responsible person of the ordering company. In the example illustrated in Figure 4, signature details "Pay according to the billed details" input by a responsible person of the ordering company are illustrated.

The management device 1, on the basis of the signature instruction, generates an electronic signature S2 performed by a responsible person of the ordering company and generates an electronic certificate (S110). In generation of the electronic certificate, the management device 1 generates a hash value of the electronic document D1 prior to attachment of the electronic signature S2 and includes this in the electronic certificate as a prior-signature hash value. In addition, the management device 1 generates a hash value of the electronic document D2 after attachment of the electronic signature S2 and includes this in the electronic certificate as a post-signature hash value. Furthermore, the management device 1 generates a hash value of the electronic document D0 not including any electronic signature S and includes this in the electronic certificate as an original document hash value. The management device 1 stores at least a part of the generated electronic certificate (for example, an electronic certificate of the second row illustrated in Figure 4) in the first ledger system 3A, the second ledger system 3B, and the third ledger system 3C (S111).

The management device 1 may determine whether the details of the electronic document D1 have been altered. In other words, the management device 1 may determine whether the details of the electronic document D1 that is an attachment target of the electronic signature S2 have been altered from the details of the electronic document D1 immediately after attachment of the previous electronic signature S1. For example, after inquiring about a post-signature hash value of the electronic certificate of the first row illustrated in Figure 4 and a prior-signature hash value of the electronic certificate of the second row from the ledger system 3, the management device 1 compares theses, determines that the electronic document D1 has not been altered when both the values match each other, and determines that the electronic document D1 has been altered when both the values do not match each other. The management device 1 may output a determination result by transmitting it to the user terminal 4B or the like. In accordance with this, a responsible person of the ordering company, in performing the electronic signature S2, can check the continuity of the details of the electronic document D1 that is a target.

The management device 1 generates an electronic document D2 by attaching the generated electronic signature S2 to the electronic document D1. Then, the management device 1 transmits the generated electronic document D2 to the user terminal 4B (S112). The user terminal 4B may store the received electronic document D2 in a storage unit that the user terminal 4B can access.

The user terminal 4B transmits the electronic document D2 to the user terminal 4A used by the responsible person of the order receiving company in accordance with an operation performed by the responsible person of the ordering company (S113). In addition, the transmission of the electronic document D2 to the user terminal 4A may be performed through the management device 1. The user terminal 4A receives the electronic document D2 (S114). Furthermore, a notification indicating approval of a payment may be transmitted from the user terminal 4B to the user terminal 4A through or not through the management device 1. The user terminal 4A may store the received electronic document D2 in a storage unit that can be accessed by the user terminal 4A.

### (3-2) Inquiry about Electronic Certificate Information

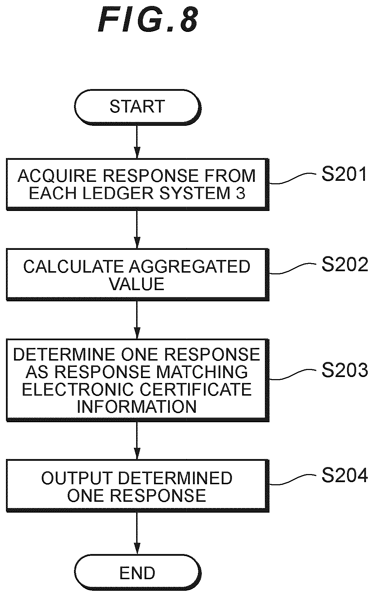

Figure 8 is an operation flowchart illustrating one example of an inquiry process for electronic certificate information that is executed by the management device 1 according to the embodiment. The inquiry process for electronic certificate information is a process of inquiring about desired electronic certificate information from the plurality of ledger systems 3 included in the electronic signature management system 100. Although the inquiry process for electronic certificate information may be executed at an arbitrary timing, for example, it may be performed when a request for inquiring about electronic certificate information has been received from the user terminal 4 or the like or may be performed when an electronic signature for an electronic document is newly generated (for example, at the timing of Step S110 described above or the like).

The response acquiring unit 18, for example, transmits a request for electronic certificate information stored in each ledger system 3 to each ledger system 3 and acquires electronic certificate information output by each ledger system 3 as a response for this request from each ledger system 3 (S201). The response acquiring unit 18 may execute this process in accordance with a request for electronic certificate information from the user terminal 4.

The aggregated value calculating unit 19, for each identical response included in a plurality of responses acquired from the plurality of ledger systems 3 by the response acquiring unit 18, aggregates a coefficient associated with the ledger system 3 that has output this response, thereby calculating an aggregated value of each identical response included in the plurality of responses (S202).

The determination unit 20, for example, on the basis of the aggregated values calculated by the aggregated value calculating unit 19, determines one response among a plurality of responses acquired from each ledger system 3 as a response matching the electronic certificate information (S203).

Here, by using an electronic signature management system 100 having three ledger systems 3 including a first ledger system 3A, a second ledger system 3B, and a third ledger system 3C as an example, a specific example of a method of determining one response as a response matching electronic certificate information through calculation of aggregated values will be described.

**[Table 1]**

| Ledger System | Coefficient | Response |
|---|---|---|
| First Ledger System 3A | 1 | 123 |
| Second Ledger System 3B | 1 | 123 |
| Third Ledger System 3C | 1 | 456 |

For example, as illustrated in Table 1, it is assumed that, for a request for predetermined electronic certificate information, a response from the first ledger system 3A is "123", a response from the second ledger system 3B is "123", and a response from the third ledger system 3C is "456". A case in which all the coefficients of the first ledger system 3A, the second ledger system 3B, and the third ledger system 3C are "1" will be assumed.

In this case, the aggregated value calculating unit 19 calculates an aggregated value of response "123" as a sum of the coefficients of the ledger systems 3 that have output this response, in other words, as "2" which is a sum of coefficient "1" of the first ledger system 3A and coefficient "1" of the second ledger system 3B. In addition, in this case, the aggregated value calculating unit 19 calculates an aggregated value of response "456" as a sum of the coefficients of the ledger systems 3 that have output this response, in other words, as "1" which is a sum of coefficient "1" of the third ledger system 3C. Then, since aggregated value "2" of response "123" is the highest among aggregated values of all the responses (response "123" and response "456"), the determination unit 20 determines this response "123" as a response matching the electronic certificate information.

In addition, in this way, in a case in which the coefficients of all the ledger systems 3 are the same like a case in which all the coefficient of the first ledger system 3A, the coefficient of the second ledger system 3B, and the coefficient of the third ledger system 3C are "1", substantially, one response is determined as a response matching the electronic certificate information according to decision by majority according to the plurality of ledger systems 3. In addition, in a case in which the number of the ledger systems 3 included in the electronic signature management system 100 according to the embodiment is an odd number, since the number of responses of which an aggregated value is the highest is narrowed into one in principle, determination of a response matching the electronic certificate information can be efficiently performed.

**[Table 2]**

| Ledger System | Coefficient | Response |
|---|---|---|
| First Ledger System 3A | 1 | 123 |
| Second Ledger System 3B | 1.5 | 123 |
| Third Ledger System 3C | 3 | 456 |

In addition, for example, as illustrated in Table 2, it is assumed that, for a request for predetermined electronic certificate information, a response from the first ledger system 3A is "123", a response from the second ledger system 3B is "123", and a response from the third ledger system 3C is "456". A case in which the coefficient of the first ledger system 3A is "1", the coefficient of the second ledger system 3B is "1.5", and the coefficient of the third ledger system 3C is "3" will be assumed.

In this case, the aggregated value calculating unit 19 calculates an aggregated value of response "123" as a sum of the coefficients of the ledger systems 3 that have output this response, in other words, as "2.5" which is a sum of coefficient "1" of the first ledger system 3A and coefficient "1.5" of the second ledger system 3B. In addition, in this case, the aggregated value calculating unit 19 calculates an aggregated value of response "456" as a sum of the coefficients of the ledger systems 3 that have output this response, in other words, as "3" which is a sum of coefficient "3" of the third ledger system 3C. Then, since aggregated value "3" of response "456" is the highest among aggregated values of all the responses (response "123" and response "456"), the determination unit 20 determines this response "456" as a response matching the electronic certificate information.

The transmission/reception unit 21 transmits the response determined as the response matching the electronic certificate information by the determination unit 20 to the user terminal 4 (S204).

### (4) Supplementary Note

In the embodiment described above, the process of determining presence/absence of an alteration of an electronic document (an electronic content) is performed at timings (Steps S110, S206, S214, and S307) at which an electronic signature is generated in accordance with a signature instruction. However, this process of determining presence/absence of an alteration is not limited to these timings, and, for example, may be executed at a timing at which a user requests the management device 1 for determination through the user terminal 4 at an arbitrary timing. At this time, the user terminal 4, for example, may receive information of an electronic signature designated by the user as a target for a determination process and transmit this information to the management device 1 with being included in the request for determination. The management device 1 may compare a prior-signature hash value relating to the designated electronic signature with a post-signature hash value of a previous electronic signature of the designated electronic signature, determine that the electronic document (the electronic content) has not been altered in the designated electronic signature in a case in which both values match each other, and determine that the electronic document (the electronic content) has been altered in the designated electronic signature in a case in which both the values do not match each other.

The electronic signature management system 100 described above can be applied also to a case in which an arbitrary user corrects agreement details after entering into a contact. In other words, first, for example, in a case in which a correction of details (a delivery date, an amount of money, and the like) of a completed contract is necessary, a user performs an operation of acquiring an electronic document that is a target in the user terminal 4. In accordance with this, the user terminal 4 acquires an electronic document that is a target from the electronic document database 2 through the management device 1. Next, the user terminal 4 appropriately corrects the electronic document in accordance with an operation of the user. Then, the user terminal 4 transmits a signature instruction for the corrected electronic document (the corrected electronic document) to the management device 1 in accordance with an operation of the user. The management device 1 generates an electronic signature for the corrected electronic document and attaches this to the corrected electronic document.

The corrected electronic document to which the electronic signature has been attached, for example, may be transmitted from the management device 1 to a user terminal 4 used by another user (the counterparty to the contract or the like). Then, after checking the details of the corrected electronic document displayed in the user terminal 4, the other user performs an operation of an electronic signature for the corrected electronic document for the user terminal 4. The user terminal 4 transmits the signature instruction to the management device 1, and the management device 1 generates an electronic signature of the other user and further attaches this to the corrected electronic document (the electronic document to which the electronic signature of the user described above is attached). In accordance with this, for example, contract details can be corrected on a file of the same electronic document without exchanging an amendment memorandum. In a conventional electronic signature, there are cases in which the original electronic signature became invalid in accordance with changes in details of the electronic document or a hash value based on this. On the other hand, in the electronic signature management system 100 according to the embodiment, even when a hash value of an electronic document is changed in accordance with an electronic signature, a series of electronic signatures associated with each other using series IDs (series identification information) can be checked, and thus management of corrections of contract details can be performed in a simplified manner.

Even when a hash value of an electronic content is changed in accordance with an electronic signature, the electronic signature management system 100 described above can check a series of electronic signatures associated with each other using series IDs (series identification information), and thus can be applied to not only contacts but also an arbitrary electronic content as long as electronic signatures are assumed to be consecutively attached. For example, the electronic signature management system 100 can also be applied to a case in which a plurality of signatories sequentially perform electronic signatures for an electronic document serving as a signature list in signature campaigns in political activities.

### Reference Signs List

- 1: Management Device
- 2: Electronic content database
- 3, 3A, 3B, 3C: Ledger system
- 4, 4A, 4B, 4C, 4D: User terminal
- 11: Document managing unit
- 12: Instruction acquiring unit
- 13: User information acquiring unit
- 14: Signature generating unit
- 15: Attachment unit
- 16: Electronic certificate generating unit
- 17: Electronic certificate information storing unit
- 18: Response acquiring unit
- 19: Aggregated value calculating unit
- 20: Determination unit
- 21: Transmission/reception unit
- 41: Imaging unit
- 42: Identifier acquiring unit
- 43: Hash value calculating unit
- 44: Integrity checking unit
- 45: Output unit
- 46: Operation receiving unit
- 47: Transmission/reception unit
- 100: Electronic Signature management system
- N: Communication network
- S: Electronic signature
- D: Electronic content
- D0, D1, D2: Electronic document

## Claims

1. A management device for managing an electronic signature for an electronic content, the management device comprising:
an acquisition unit acquiring an instruction of a signature for an electronic content;
a signature generating unit generating an electronic signature in accordance with the instruction;
an attachment unit attaching the generated electronic signature to the electronic content;
an electronic certificate generating unit generating an electronic certificate relating to the electronic signature;
an electronic certificate information storing unit executing a process for storing electronic certificate information, which is at least a part of the electronic certificate, in each ledger system of a plurality of ledger systems;
a response acquiring unit acquiring a plurality of responses that are outputs respectively from the plurality of ledger systems for a request, with the request for the electronic certificate information, which is stored in each of the plurality of ledger systems, being transmitted to the plurality of ledger systems;
an aggregated value calculating unit calculating an aggregated value of each of identical responses included in the plurality of responses by aggregating coefficients associated with the ledger systems that have output the responses, for each of the identical responses included in the plurality of responses;
a determination unit determining one response among the plurality of responses as a response matching the electronic certificate information on the basis of the aggregated values; and
an output unit outputting the one response.

2. The management device according to claim 1, wherein the determination unit determines a response, the aggregated value of which is the highest, as the one response.

3. The management device according to claim 1, wherein at least one of the plurality of ledger systems is a distributed-type ledger system.

4. The management device according to claim 1, wherein the coefficient is set on the basis of characteristics information representing characteristics of the ledger system.

5. The management device according to claim 4, wherein the characteristics information is set on the basis of at least one of an algorithm used by the ledger system for storing data and the number of nodes included in the ledger system.

6. The management device according to claim 1, wherein the coefficients associated respectively with the plurality of ledger systems are identical.

7. The management device according to claim 6, wherein the number of the plurality of ledger systems is an odd number.

8. The management device according to claim 1, wherein the electronic content is an electronic document.

9. The management device according to claim 1, wherein the electronic certificate information is a hash value generated on the basis of the electronic content.

10. A control method performed by a management device for managing an electronic signature for an electronic content, the control method comprising:
a step of acquiring an instruction of a signature for an electronic content;
a step of generating an electronic signature in accordance with the instruction;
a step of attaching the generated electronic signature to the electronic content;
a step of generating an electronic certificate relating to the electronic signature;
a step of executing a process for storing electronic certificate information that is at least a part of the electronic certificate in each ledger system of a plurality of ledger systems;
a step of acquiring a plurality of responses that are outputs respectively from the plurality of ledger systems for a request, with the request for the electronic certificate information, which is stored in each of the plurality of ledger systems, being transmitted to the plurality of ledger systems;
a step of calculating an aggregated value of each of identical responses included in the plurality of responses by aggregating coefficients associated with the ledger systems that have output the responses, for each of the identical responses included in the plurality of responses;
a step of determining one response among the plurality of responses as a response matching the electronic certificate information on the basis of the aggregated values; and
a step of outputting the one response.

11. A program causing an information processing device to function as a management device for managing an electronic signature for an electronic content, the program causing the management device to function as:
an acquisition unit acquiring an instruction of a signature for an electronic content;
a signature generating unit generating an electronic signature in accordance with the instruction;
an attachment unit attaching the generated electronic signature to the electronic content;
an electronic certificate generating unit generating an electronic certificate relating to the electronic signature;
an electronic certificate information storing unit executing a process for storing electronic certificate information that is at least a part of the electronic certificate in each ledger system of a plurality of ledger systems;
a response acquiring unit acquiring a plurality of responses that are outputs respectively from the plurality of ledger systems for a request, with the request for the electronic certificate information, which is stored in each of the plurality of ledger systems, being transmitted to the plurality of ledger systems;
an aggregated value calculating unit calculating an aggregated value of each of identical responses included in the plurality of responses by aggregating coefficients associated with the ledger systems that have output the responses, for each of the identical responses included in the plurality of responses;
a determination unit determining one response among the plurality of responses as a response matching the electronic certificate information on the basis of the aggregated values; and
an output unit outputting the one response.
